# FASCICULE DE BREVET EUROPEEN

(11) **EP 2 943 695 B1**
(45) Date de publication et mention de la délivrance du brevet: **27.05.2020**
(21) Numéro de dépôt: 14703142.1
(22) Date de dépôt: 13.01.2014
(51) Int. Cl.: F16C 35/077, F04D 29/059, F04D 29/66, F16C 27/04

(54) **MACHINE TOURNANTE COMPRENANT UN COLLIER AMORTISSEUR**
DREHMASCHINE MIT DÄMPFUNGSKRAGEN
ROTATING MACHINE COMPRISING A DAMPING COLLAR

(30) Priorité: 14.01.2013 FR 1350296
(43) Date de publication de la demande: 18.11.2015
(73) Titulaire: Safran Aircraft Engines, 75015 Paris (FR); Centre National de la Recherche Scientifique (C.N.R.S.), 75016 Paris (FR)
(72) Inventeur: ARGHIR, Mihai, 86180 Buxerolles (FR); MATTA, Pierre, FINTAS (KW); GUINGO, Sébastien, 27120 Pacy-sur-Eure (FR)
(74) Mandataire: Cabinet Beau de Loménie
(86) Numéro de dépôt international: PCT/FR2014/050060
(87) Numéro de publication internationale: WO 2014/108654

(56) Documents cités:
- FR-A1- 2 529 975
- FR-A1- 2 611 008
- JP-U- S5 145 547
- US-A- 1 086 781
- US-A- 3 097 895

## Description

La présente invention se rapporte à une machine tournante comprenant un collier amortisseur.

Un tel collier selon la présente invention est particulièrement adapté à être intégré dans une turbomachine par exemple, afin de conférer de l'amortissement à la partie tournante de la turbomachine, en particulier lors du passage des vitesses critiques.

La machine tournante concernée comprend principalement une partie tournante pouvant être un rotor et une partie fixe pouvant être un stator, ainsi qu'au moins un roulement muni d'une bague fixe et d'une bague mobile afin de supporter et guider la partie tournante en rotation. Sur une telle machine, le passage des vitesses critiques et la stabilité radiale à haute vitesse de rotation sont difficiles à assurer compte tenu des faibles niveaux d'amortissement externe disponibles. De fortes vibrations peuvent entraîner un surchargement du ou des roulement(s) ainsi que des contacts entre la partie tournante et la partie fixe.

On connaît déjà des colliers amortisseurs utilisés pour conférer de l'amortissement aux rotors de turbomachines, par exemple des documents FR 2 529 975 A1 montrant le préambule de la revendication 1 annexée, et JP S51 45547 U. En particulier, on connaît un type de collier réalisé à partir d'une bande de tôle d'acier venant se positionner autour de la bague fixe du roulement. Ces colliers amortisseurs sont conformés de façon à présenter des ondulations circonférentielles. Au montage, les ondulations sont légèrement comprimées entre la bague fixe du roulement et un carter externe de ladite machine tournante. Ainsi, les déplacements radiaux de la bague fixe du roulement sont absorbés par les déformations des ondulations du collier qui se comportent comme des ressorts. Pour cette raison, ce type de colliers est appelé « tolerance ring » ou « cale élastique ». Ces colliers déjà connus sont issus de procédés de mise en forme qui comprennent un traitement thermique de la bande de tôle suivi d'un emboutissage puis d'un autre traitement thermique pour que la bande de tôle retrouve son élasticité. Cette succession d'étapes de fabrication n'est pas toujours très précise et ne permet pas de produire des colliers amortisseurs identiques ayant les mêmes caractéristiques dimensionnelles et mécaniques. Par ailleurs, cette succession d'étapes ne permet pas non plus une estimation précise des caractéristiques dimensionnelles et mécaniques de ces colliers.

Un objectif de la présente invention est de fournir un collier amortisseur pour une machine tournante, telle qu'une turbomachine par exemple, plus performant que celui décrit ci-dessus.

En particulier, un des objectifs de la présente invention est de proposer un collier amortisseur dont les caractéristiques dimensionnelles et mécaniques sont facilement reproductibles. Plus précisément, le collier selon l'invention permet une estimation précise de l'amortissement et de la raideur conférée à ladite partie tournante.

Plus particulièrement, l'invention concerne une machine tournante définie par la revendication 1, et comprenant notamment :
- une partie fixe et une partie tournante,
- au moins un roulement muni d'une bague fixe et d'une bague tournante, monté entre ladite partie fixe et ladite partie tournante afin de guider la partie tournante en rotation, et
- un collier amortisseur intercalé entre la bague fixe dudit roulement et la partie fixe,
caractérisée en ce que ledit collier amortisseur comprend une bande flexible dans laquelle sont découpées des lamelles et en ce que cette bande flexible est conformée en anneau autour de la bague fixe dudit roulement, la conformation en anneau provoquant un écartement des lamelles vers l'extérieur du collier de sorte que les bords libres desdites lamelles sont en contact avec ladite partie fixe.

Grâce à ces dispositions, aucun procédé de mise en forme n'est nécessaire. Cela permet une estimation précise des caractéristiques dimensionnelles et mécaniques du collier amortisseur selon l'invention. De plus, ces colliers peuvent être réalisés avec une bonne reproductibilité, c'est-à-dire ayant tous les mêmes caractéristiques dimensionnelles et mécaniques, estimées de manière précise.

En outre, un autre avantage réside dans la simplicité de la structure dudit collier amortisseur. En effet, il suffit de découper des lamelles dans la bande flexible et conformer celle-ci en anneau pour provoquer l'écartement naturel des lamelles découpées, radialement vers l'extérieur. Lorsque des vibrations sont engendrées par la rotation de la partie tournante, les lamelles se comportent comme des ressorts et le collier confère de la souplesse à la suspension. De plus, les vibrations de la partie tournante vont engendrer des déplacements des extrémités libres des lamelles en contact avec la partie fixe, la force de frottement sec ainsi engendrée apporte un amortissement.

Selon un mode de réalisation, la bande flexible est métallique.

Très généralement, ladite partie fixe forme un carter qui abrite ladite partie tournante.

Le principe de l'invention pourrait néanmoins s'appliquer à un agencement inversé où une partie mobile serait montée en rotation autour d'un arbre fixe.

Selon un mode de réalisation, ledit collier amortisseur est en contact avec la bague fixe du roulement à billes.

Selon un mode de réalisation, ledit roulement est logé dans un insert cylindrique tubulaire et ledit collier amortisseur est directement fixé sur ledit insert cylindrique tubulaire.

Selon un mode de réalisation, ledit roulement est une paire de roulements à billes à contact oblique.

Selon l'invention, le collier amortisseur est fixé audit insert cylindrique tubulaire par des vis.

Selon un mode de réalisation, ledit collier amortisseur présente deux bandes marginales par lesquelles il est fixé audit insert cylindrique tubulaire.

Ainsi, grâce à ces dispositions, la fixation du collier dans la machine tournante est aisée.

Selon un mode de réalisation, chaque lamelle est individualisée par une découpe ayant la forme générale d'un « U ».

Selon un mode de réalisation, cette forme générale en « U » délimite une lamelle ayant un bord libre rectiligne.

Selon un mode de réalisation, ledit bord libre rectiligne est parallèle à l'axe de rotation de la partie tournante.

Selon ces dispositions, on confère un amortissement optimal à la partie tournante.

Selon un mode de réalisation, le collier est muni d'au moins une rangée de lamelles régulièrement espacées sur toute la circonférence dudit collier.

Selon un mode de réalisation, ladite partie tournante est un rotor.

Selon un mode de réalisation, ladite partie fixe forme un carter.

Selon un mode de réalisation, ladite bande flexible est en acier allié.

D'autres caractéristiques et avantages de l'invention ressortiront à la lecture de la description suivante d'exemples de réalisation de l'invention donnés à titre illustratif et non limitatifs. Cette description fait référence aux dessins annexés sur lesquels :
- la figure 1 est une vue partielle en perspective et en coupe axiale d'une machine tournante comprenant le collier amortisseur selon l'invention ;
- la figure 2 est une vue de détail d'une bande flexible prédécoupée selon l'invention en cours de conformation ;
- la figure 3 est une vue en perspective du collier amortisseur selon l'invention réalisé à partir de la bande flexible représentée sur la figure 2 ; et
- la figure 4 est une vue en coupe selon l'axe IV-IV de la figure 1.

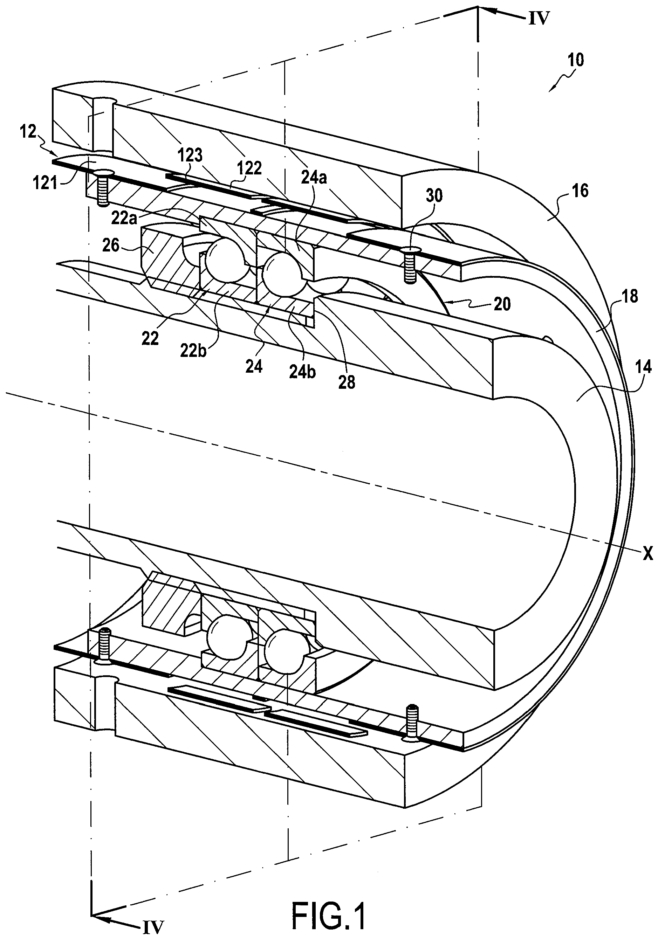

Sur la figure 1 on a représenté une partie d'une machine tournante 10 équipée d'un collier amortisseur 12 selon l'invention.

Cette machine tournante 10 comprend une partie tournante en sa partie centrale ainsi qu'une partie fixe à sa périphérie.

La partie tournante, en rotation autour d'un axe de rotation X longitudinal, comprend un arbre (non représenté ici) abrité dans un logement 14, ledit logement 14 étant également en rotation autour de l'axe de rotation X longitudinal. Dans certains exemples de réalisation, la partie tournante peut être un rotor de turbomachine.

La partie fixe de la machine tournante 10 forme un carter externe 16 encastré dans un bâti (non représenté ici) de la machine tournante 10.

Le carter externe 16 loge un palier comprenant au moins un roulement à billes à contact oblique 20 qui est, dans cet exemple particulier, une paire de roulements à billes à contact oblique, abritée par un insert cylindrique tubulaire 18 fixe. Dans cet exemple, l'insert tubulaire 18 permet l'application d'une précharge sur la paire de roulements à billes à contact oblique.

Chacun des roulements à billes de la paire de roulements à billes à contact oblique 20 comprend une bague fixe ainsi qu'une bague tournante. Bien sûr, chacun des roulements de la paire de roulements à billes à contact oblique 20 peut-être de tout autre type pourvu qu'il soit muni d'une bague fixe et d'une bague tournante. Le carter externe 16 loge en outre le collier amortisseur 12 selon l'invention qui est fixé sur ledit insert cylindrique tubulaire 18 et qui est en partie en contact avec ledit carter externe 16.

La paire de roulements à billes à contact oblique 20 est positionnée entre la partie tournante et le carter externe 16 de la machine tournante 10 et plus précisément entre le logement de l'arbre 14 et l'insert cylindrique tubulaire. Cette paire de roulements à billes à contact oblique 20 comprend un premier roulement à billes à contact oblique 22, ci-après appelé « premier roulement 22 » ainsi qu'un deuxième roulement à billes 24, appelé « deuxième roulement 24 ».

Le premier roulement 22 comprend une première bague fixe 22a et une première bague tournante 22b, et le deuxième roulement comprend une deuxième bague fixe 24a et une deuxième bague tournante 24b.

Afin de maintenir la paire de roulements à billes à contact oblique 20 en bonne position entre le logement de l'arbre 14 et l'insert cylindrique tubulaire 18, un écrou 26 est positionné contre la première bague tournante 22b du premier roulement à billes 22 de manière à ce que la deuxième bague tournante 24b du deuxième roulement à billes 24 soit en appui contre un épaulement 28 du logement 14 de l'arbre. Par ailleurs, l'insert cylindrique tubulaire 18 permet l'application d'une précharge sur ladite paire de roulements à billes à contact oblique 20.

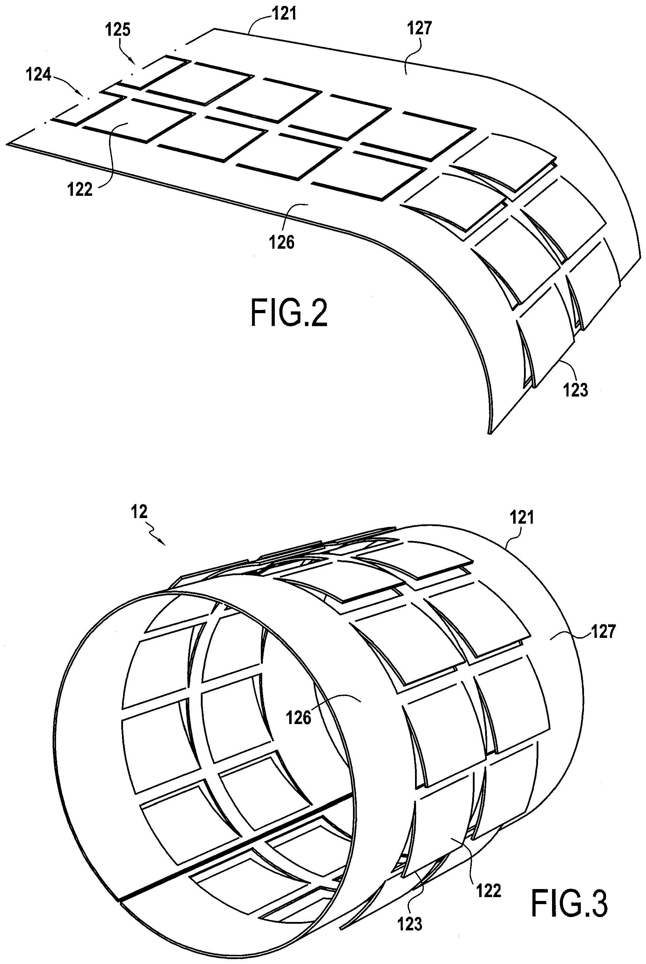

La structure du collier amortisseur 12 selon l'invention va être décrite plus en détail en référence aux figures 2 et 3.

Le collier amortisseur 12 est formé à partir d'une bande flexible 121 de faible épaisseur, ici en métal tel que l'acier allié. La bande flexible 121 en métal est appelée dans la suite de la description « bande métallique 121 ».

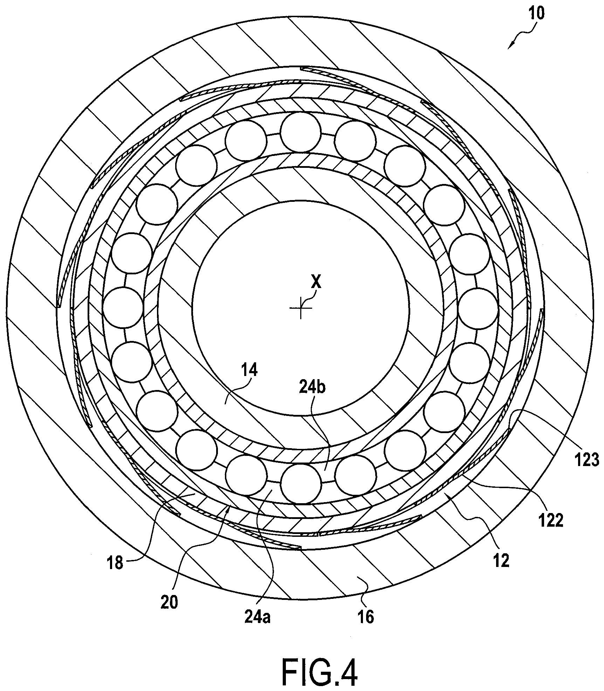

Des lamelles 122 ont été découpées, par électroérosion par exemple dans ladite bande métallique 121. Ces lamelles 122 sont définies par des découpes en forme générale de « U » et dans cet exemple particulier, le bord libre 123 de chaque lamelle 122 est rectiligne. De façon avantageuse, les lamelles 122 sont régulièrement espacées les unes des autres et sont découpées, de sorte que lors de la conformation de la bande métallique 121 en anneau, le bord libre 123 de chaque lamelle 122 est parallèle à l'axe de rotation X de la partie tournante (voir en particulier les figures 1 et 4). Dans cet exemple, les lamelles 122 forment deux rangées 124, 125, adjacentes parallèles. Deux bandes marginales 126, 127, sont définies de part et d'autre de ces deux rangées de lamelles. Dans cet exemple, lesdites bandes marginales 126, 127, ne possèdent pas de lamelle

Le montage du collier amortisseur 12 selon l'invention dans la machine tournante 10 est visible sur les figures 1 et 4.

Afin de monter le collier amortisseur 12 dans la machine tournante 10, entre l'insert cylindrique tubulaire 18 et le carter externe 16, la bande métallique 121 présentant les lamelles 122 découpées est conformée en anneau pour former ledit collier amortisseur 12 selon l'invention, en rejoignant bord à bord les extrémités de la bande métallique 121. Cela a pour effet de provoquer un écartement des lamelles 122 vers l'extérieur du collier 12 comme cela est en particulier représenté sur la figure 3. Comme expliqué précédemment, le bord libre 123 de chaque lamelle 122, parallèle à l'axe de rotation X de la partie tournante vient en contact avec la face interne du carter externe 16 et confère de la raideur et de l'amortissement à la partie tournante de la machine tournante 10 lorsque des vibrations sont engendrées.

En pratique, le collier amortisseur 12 est fixé à l'insert cylindrique tubulaire 18 au niveau de ses deux bandes marginales 126, 127, par des vis 30.

Après le montage du collier 12 dans la machine tournante 10, les deux rangées de lamelles 124, 125, sont positionnées respectivement à l'extérieur des bagues fixes 22a, 24a, des premier et deuxième roulements 22,24.

Dans certains exemples de réalisation ne représentant pas l'invention, l'insert cylindrique tubulaire 18 n'est pas toujours présent. Le collier amortisseur 12 est alors directement intercalé entre une bague fixe du roulement à billes et le carter externe 16.

## Revendications

1. Machine tournante (10) comprenant :
- une partie fixe et une partie tournante,
- au moins un roulement (20) muni d'une bague fixe et d'une bague tournante, monté entre ladite partie fixe et ladite partie tournante afin de guider la partie tournante en rotation, et
- un collier amortisseur (12) intercalé entre la bague fixe et la partie fixe,
dans lequel ledit collier amortisseur (12) comprend une bande flexible (121) dans laquelle sont découpées des lamelles (122) et cette bande flexible (121) est conformée en anneau autour de la bague fixe dudit roulement (20), la conformation en anneau provoquant un écartement des lamelles (122) vers l'extérieur du collier (12) de sorte que les bords libres (123) desdites lamelles (122) sont en contact avec ladite partie fixe, ledit roulement (20) étant logé dans un insert cylindrique tubulaire (18) et ledit collier amortisseur (12) étant directement fixé sur ledit insert cylindrique tubulaire (18), la machine tournante étant **caractérisée en ce que** le collier amortisseur (12) est fixé audit insert cylindrique tubulaire (18) par des vis (30).

2. Machine tournante (10) selon la revendication 1, **caractérisée en ce que** la bande flexible est métallique.

3. Machine tournante (10) selon la revendication 1 ou 2, **caractérisée en ce que** ladite partie fixe abrite ladite partie tournante.

4. Machine tournante (10) selon l'une quelconque des revendications 1 à 3, **caractérisée en ce que** le roulement (20) est une paire de roulements à billes à contact oblique.

5. Machine tournante (10) selon l'une quelconque des revendications 1 à 4, **caractérisée en ce que** ledit collier amortisseur (12) présente deux bandes marginales (126, 127) par lesquelles il est fixé audit insert tubulaire cylindrique (18).

6. Machine tournante (10) selon l'une quelconque des revendications 1 à 5, **caractérisée en ce que** chaque lamelle (122) est individualisée par une découpe ayant la forme générale d'un « U ».

7. Machine tournante (10) selon la revendication 6, **caractérisée en ce que** cette forme générale en « U » délimite une lamelle ayant un bord libre rectiligne (123).

8. Machine tournante (10) selon la revendication 7, **caractérisée en ce que** ledit bord libre rectiligne (123) est parallèle à un axe de rotation (X) de la partie tournante.

9. Machine tournante (10) selon l'une quelconque des revendications 1 à 8, **caractérisée en ce que** le collier est muni d'au moins une rangée (124, 125) de lamelles (122) régulièrement espacées sur toute la circonférence dudit collier (12).

10. Machine tournante (10) selon l'une quelconque des revendications 1 à 9, **caractérisée en ce que** ladite bande flexible (121) est en acier allié.

## Patentansprüche

1. Drehende Maschine (10), umfassend:
- einen festen Teil und einen drehenden Teil,
- mindestens ein Lager (20), das mit einem festen Ring und einem drehenden Ring versehen ist und das zwischen dem festen Teil und zwischen dem drehenden Teil montiert ist, um den drehenden Teil in Rotation zu führen, und
- einen Dämpfungskragen (12), der zwischen dem festen Ring und dem festen Teil angeordnet ist,
wobei der genannte Dämpfungskragen (12) ein flexibles Band (121) umfasst, in dem Lamellen (122) ausgeschnitten sind, und wobei dieses flexible Band (121) ringförmig um den festen Ring des Lagers (20) angepasst ist, wobei die ringförmige Anpassung einen Abstand der Lamellen (122) zur Außenseite des Kragens (12) derart hervorruft, dass die freien Ränder (123) der Lamellen (122) mit dem festen Teil in Kontakt stehen, wobei das Lager (20) in einem rohrförmigen zylindrischen Einsatz (18) aufgenommen ist, und wobei der Dämpfungskragen (12) direkt an dem rohrförmigen zylindrischen Einsatz (18) befestigt ist, wobei die drehende Maschine **dadurch gekennzeichnet ist, dass** der Dämpfungskragen (12) an dem rohrförmigen zylindrischen Einsatz (18) durch Schrauben (30) befestigt ist.

2. Drehende Maschine (10) nach Anspruch 1, **dadurch gekennzeichnet, dass** das flexible Band metallisch ist.

3. Drehende Maschine (10) nach Anspruch 1 oder 2, **dadurch gekennzeichnet, dass** der feste Teil den drehenden Teil abdeckt.

4. Drehende Maschine (10) nach einem der Ansprüche 1 bis 3, **dadurch gekennzeichnet, dass** das Lager (20) ein Paar von Schrägkugellagern ist.

5. Drehende Maschine (10) nach einem der Ansprüche 1 bis 4, **dadurch gekennzeichnet, dass** der Dämpfungskragen (12) zwei Randbänder (126, 127) aufweist, durch die er an dem zylindrischen rohrförmigen Einsatz (18) befestigt ist.

6. Drehende Maschine (10) nach einem der Ansprüche 1 bis 5, **dadurch gekennzeichnet, dass** jede Lamelle (122) durch einen Schnitt mit der allgemeinen Form eines "U" individualisiert ist.

7. Drehende Maschine (10) nach Anspruch 6, **dadurch gekennzeichnet, dass** diese allgemeine Form eines "U" eine Lamelle mit einem geraden freien Rand (123) begrenzt.

8. Drehende Maschine (10) nach Anspruch 7, **dadurch gekennzeichnet, dass** der gerade freie Rand (123) parallel zu einer Drehachse (X) des drehenden Teils ist.

9. Drehende Maschine (10) nach einem der Ansprüche 1 bis 8, **dadurch gekennzeichnet, dass** der Kragen mit mindestens einer Reihe (124, 125) von Lamellen (122) versehen ist, die regelmäßig auf dem gesamten Umfang des Kragens (12) beabstandet sind.

10. Drehende Maschine (10) nach einem der Ansprüche 1 bis 9, **dadurch gekennzeichnet, dass** das genannte flexible Band (121) aus legiertem Stahl besteht.

## Claims

1. A rotary machine (10) comprising:
• a stationary portion and a rotary portion;
• at least one bearing (20) provided with a stationary ring and a rotary ring, the bearing being mounted between said stationary portion and said rotary portion in order to guide the rotary portion in rotation; and
• a damper collar (12) interposed between the stationary ring and the stationary portion;
wherein said damper collar (12) comprises a flexible strip (121) having tongues (122) cut out therein, and said flexible strip (121) is shaped into a ring around the stationary ring of said bearing (20), the shaping of the strip into a ring causing the tongues (122) to move outwards from the collar (12) so that the free edges (123) of said tongues (122) come into contact with the stationary portion, wherein said bearing (20) is housed in a tubular cylindrical insert (18) and said damper collar (12) is fastened directly on said tubular cylindrical insert (18), the rotary machine (10) being **characterized in that** the damper collar (12) is fastened to said tubular cylindrical insert (18) by screws (30).

2. A rotary machine (10) according to claim 1, **characterized in that** the flexible strip is made of metal.

3. A rotary machine (10) according to claim 1 or claim 2, **characterized in that** said stationary portion shelters said rotary portion.

4. A rotary machine (10) according to any one of claims 1 to 3, **characterized in that** the bearing (20) comprises a pair of angular contact ball bearings.

5. A rotary machine (10) according to any one of claims 1 to 4, **characterized in that** said damper collar (12) presents two marginal strips (126, 127) via which it is fastened to said cylindrical tubular insert (18).

6. A rotary machine (10) according to any one of claims 1 to 5, **characterized in that** each tongue (122) is individualized by a cutout that is generally U-shaped.

7. A rotary machine (10) according to claim 6, **characterized in that** this general U-shape defines a tongue having a rectilinear free edge (123).

8. A rotary machine (10) according to claim 7, **characterized in that** said rectilinear free edge (123) is parallel to an axis of rotation (X) of the rotary portion.

9. A rotary machine (10) according to any one of claims 1 to 8, **characterized in that** the collar is provided with at least one row (124, 125) of tongues (122) that are regularly spaced apart around the entire circumference of said collar (12).

10. A rotary machine (10) according to any one of claims 1 to 9, **characterized in that** said flexible strip (121) is made of alloy steel.
